# EUROPEAN PATENT SPECIFICATION

(11) **EP 4 164 378 B1**
(45) Date of publication and mention of the grant of the patent: **05.08.2026**
(21) Application number: 21731780.9
(22) Date of filing: 10.06.2021
(51) Int. Cl.: A01M 23/34, A01M 23/38, A01M 23/36

(54) **A TRAP WITH A NEAR-FIELD COMMUNICATION DEVICE**
FALLE MIT EINER NAHFELDKOMMUNIKATIONSVORRICHTUNG
PIÈGE DOTÉ D'UN DISPOSITIF DE COMMUNICATION EN CHAMP PROCHE

(30) Priority: 15.06.2020 DK PA202000699
(43) Date of publication of application: 19.04.2023
(73) Proprietor: Camro A/S, 9610 Nørager (DK)
(72) Inventor: SØRENSEN, Kurt, 9610 Nørager (DK)
(74) Representative: Larsen & Birkeholm A/S
(86) International application number: PCT/EP2021/065603
(87) International publication number: WO 2021/254865

(56) References cited:
- US-A1- 2011 296 739
- US-A1- 2018 249 699
- US-A1- 2020 005 626

## Description

### Technical field of the invention

The present invention relates to the field of traps, especially for rodents.

### Background of the invention

To devise and target efficient pest control strategies, it is essential to have a reliable and sensitive method of identifying the presence and location of target pests in a given environment. Conventional methods of detection rely on an infestation reaching large enough proportions to show physical signs, the presence of faeces and signs of gnawing damage are the most commonly used. Whilst such signs can be reliable, they usually identify an infestation that is well established, which will be difficult to eradicate and could already have caused much damage. Small numbers of target pests will not always leave such obvious signs in visible sites. Droppings from e.g. mice are often difficult to spot, while those from rats are usually located in small numbers of latrine sites. Therefore, whilst such methods can be reliable for detecting large scale infestations, they are usually inadequate for detecting the presence of target animals at a low level. Mechanical traps with gas or spring driven killing mechanisms are known in the art (e.g. US 2011/0296739).

### Object of the Invention

The objective of the present invention is to provide a rechargeable trap, preferably automatic, suitable for use in a system for detecting and predicting target animal infestations, which alleviates or mitigates the disadvantages associated with prior art methods.

### Description of the Invention

The inventor has created a solution where users can easily collect data from their rechargeable traps and pool their data with other users to get knowledge about a much larger area. In order for this method to work, it is important that the data collection by individual users is as easy as possible, but also that the pooling of data is performed automatically.

The invention relates to a rechargeable trap, such as an automatic rechargeable trap, comprising:
- a housing with an entrance leading to a kill zone chamber;
- a spring driven and/or gas pressure driven killing means adapted for operating within said kill zone chamber;
- a trigger mechanism adapted to activate said killing means;
- a sensor unit configured for determining the number of kills by monitoring the number of triggers of the killing means;
- at least one control unit connected to said sensor unit, wherein said control unit comprises at least one data collection device adapted to collect measurement data acquired from said sensor unit; wherein said control unit further comprises at least one wireless near-field communication device adapted to transmit measurement data about the number of activations of said killing means, preferably time stamped, and an identification number of said trap.

As used herein, the term "near-field communication", abbreviated by NFC, generally refers to a wireless transfer of data over short distances of up to 10 cm, generally having a low data transfer rate, such as a data transfer rate of no more than 424 kBit/s. As an example, the near-field communication may follow a passive standard, i.e. a standard in which one of the communication partners is a passive component, which only answers communication requests received from the other partner, such as the standard defined in ISO 14443, ECMA-340, and/or ISO 15693. Many modern handheld computers (e.g., smart phones or tablets) incorporate near field communication (NFC) devices. Hence, as long as the trap and the handheld computer are NFC-capable and that they are within the NFC wireless range, the connection is valid.

In one or more embodiments, the wireless near-field communication device of the trap is the passive element of the communication. Additionally, or alternatively, other types of near-field communication may be used, such as near-field communications in which both the near-field communication device of the trap and in the handheld computer are active partners, i.e. partners, which may both send and receive communication requests. Hence, in one or more embodiments, the near-field communication device of the trap comprises at least one communication component adapted to perform the near-field communication. Thus, as an example, the near-field communication device of the trap comprises at least one antenna.

Either the sensor unit and/or the control unit and/or the data collection device and/or the near-field communication device store the measurement data in their physical memory, which may be retrieved by another device in communication therewith. A handheld computer, such as a smartphone or tablet can retrieve the measurement data, e.g. the number of kills, preferably timestamped, from the near-field communication device via any suitable near field communication protocol. The term "protocol" refers to the rules that govern the exchange of messages or content between the near-field communication device and the handheld computer. Such protocols are well-known within the field of NFC and may include data security protocol instructions, handshake between the devices or the like. The handheld computer may perform statistical operations on the received data or merely forward the data to another device, such as a server, database, computer or the like. Examples of a suitable handheld computer may include, but are not limited to a laptop, cellular phone, smart phone, tablet, mobile computing device, handheld radio, or combinations thereof. In general, each handheld computer may be adapted to support video, audio, text, and/or data communications with other mobile devices as well as one or more communication devices, nodes, links, and/or servers. The type of medium used by the handheld computer to communicate with other communication devices nodes, links, and/or servers may depend upon the communication applications available on the handheld computer. The handheld computer must, of course, comprise a near field communication device.

At last two, preferably all, of the sensor unit, the control unit, the data collection device, and the near-field communication device may have a shared memory.

Mechanical traps are characterised by killing means that strikes the rodent/target animal and almost instantly kills the rodent/target animal. The killing means in mechanical traps are normally spring driven or gas pressure driven and may be recharged by electrical means, springs, or gas pressure driven means. The present invention relates to mechanical traps with a killing means, preferably in the form of a piston or spear.

Preferably, the present invention relates to traps with a kill zone and a lure or bait zone positioned in continuation of (e.g. further inside the trap) the kill zone. In this way, the rodent/target animal will have to enter the kill zone to try to reach the lure or bait zone. The spring driven and/or gas pressure driven killing means will operate within the kill zone chamber and is activated when the rodent/target animal activates a trigger mechanism.

The trigger mechanism is preferably positioned either within the kill zone chamber or in an area (trigger zone) positioned between the kill zone chamber and the lure and/or bait chamber. In the latter situation, the lure and/or bait chamber is obviously indirectly coupled to the kill zone chamber via the trigger zone/trigger zone chamber.

For ease of renewing lure or bait within the lure or bait zone, the trap according to the present invention comprises a detachable lure and/or bait chamber connected to said kill zone chamber.

In one or more embodiments, the near-field communication device is adapted for being turned in multiple directions. This embodiment allows the user to mount the trap on different objects, or within a separate housing, and then afterwards simply being able to adjust the direction/position of the near-field communication device for optimal data transfer.

In one or more embodiments, the near-field communication device comprises an antenna adapted for being turned in multiple directions.

In one or more embodiments, the rechargeable trap further comprises a detachable lure and/or bait chamber directly or indirectly connected to said kill zone chamber; and wherein said near-field communication device is connected to said lure and/or bait chamber. This embodiment allows the user to easily service the trap by exchanging the lure and/or bait, but also to change battery in the near-field communication device or to exchange the entire module for recharging an embedded rechargeable battery. Preferably, the near-field communication device is adapted for being turned in multiple directions. The lure and/or bait chamber is preferably adapted for being rotated relative to said kill zone chamber. The near-field communication device preferably comprises an antenna positioned at an oblique angle relative to the lure and/or bait chamber's axis of rotation. The near-field communication device may be mounted in a housing. The housing may be adapted to support an antenna. A part of the housing may preferably be shaped as a prismatoid, such as a prism, a pyramid, an antiprism, a cupola, or a frustum. In this situation, the antenna is preferably positioned along a single side wall defining such a shape. The base wall or a side wall is connected to the detachable lure and/or bait chamber, and any top wall present may extend away from the detachable lure and/or bait chamber. This configuration allows the antenna to be turned in multiple directions relative to the detachable lure and/or bait chamber that are easily identified by the user.

In one or more embodiments, a wall of said kill zone chamber is configured with a ring-shaped opening; wherein said lure and/or bait chamber is configured with a ring-shaped opening, and wherein said ring-shaped openings are adapted to couple and rotate relative to one another. This embodiment allows the near-field communication device to be turned together with the lure and/or bait chamber. The housing of the near-field communication device may be connected to the lure and/or bait chamber and shaped as a prismatoid as described above. Again, the antenna of the near-field communication device may preferably be positioned along a single side wall defining the prismatoid-shaped housing.

As used in the specification and the appended claims, the singular forms "a", "an", and "the" include plural referents unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about", it will be understood that the particular value forms another embodiment.

It should be noted that embodiments and features described in the context of one of the aspects of the present invention also apply to the other aspects of the invention.

### Brief description of the figures

Figure 1 is a cross-sectional view of a trap in accordance with various embodiments of the invention;
Figures 2A and 2B shows two different spatial positions of the antenna of the NFC device;

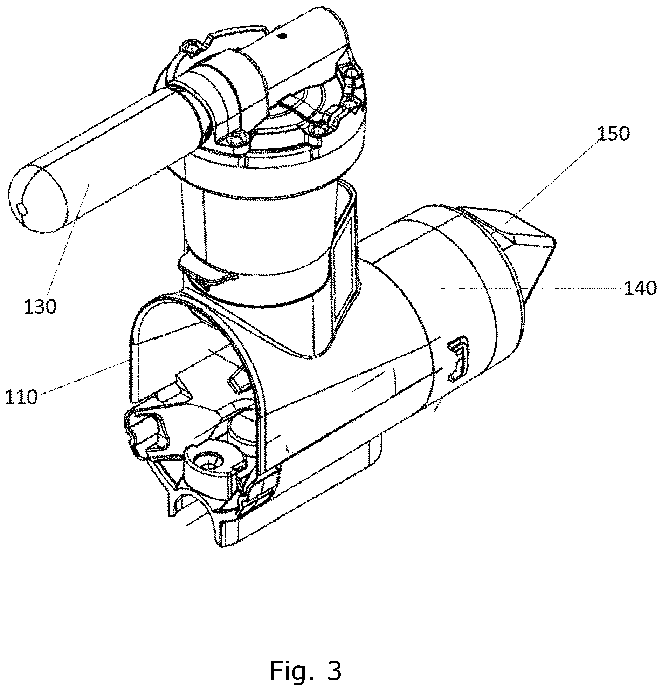

Figure 3 is a perspective of a trap in accordance with various embodiments of the invention; and
Figure 4 is an exemplary circuit of an NFC device with antenna embedded in the communication unit.

### References

- 100: Trap
- 110: Entrance
- 120: Trigger rod
- 130: Gas tank
- 140: Lure and/or bait chamber
- 142: Container/insert
- 150: Control unit
- 151: Housing
- 152: NFC device
- 153: Flange
- 154: Antenna
- 155: Side wall
- 156: Battery
- 160: Spring
- 170: Kill zone chamber
- 180: Piston or spear
- 190: Insert

### Detailed Description of the Invention

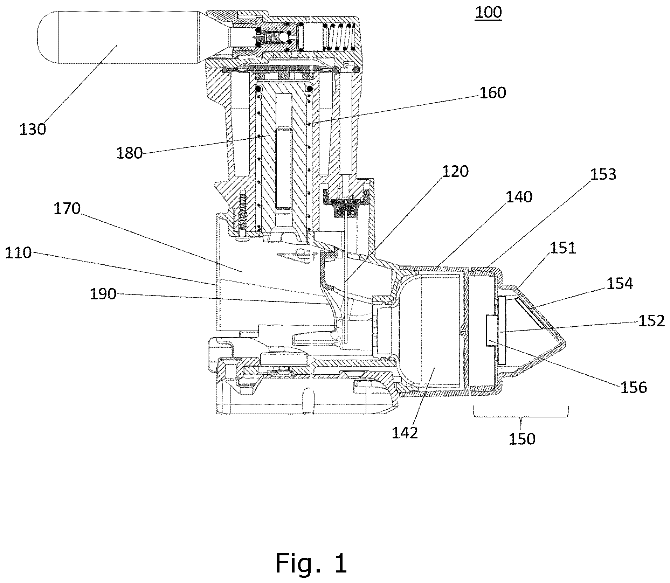

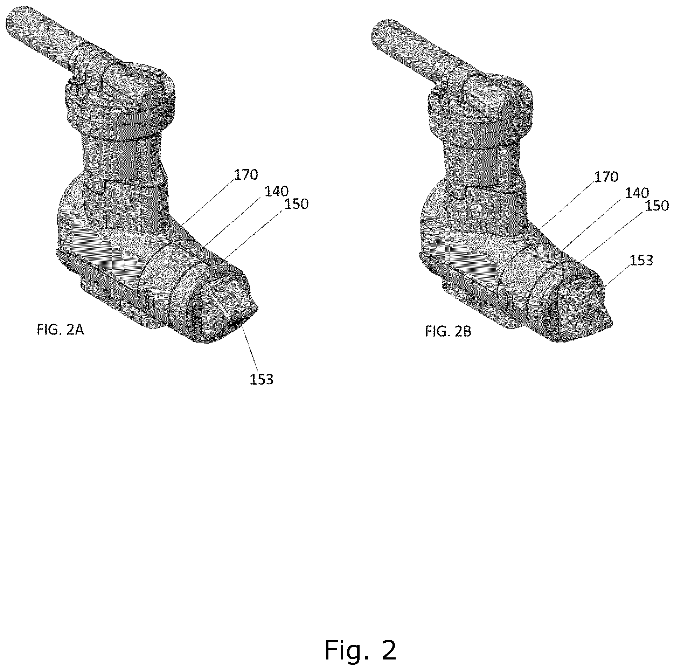

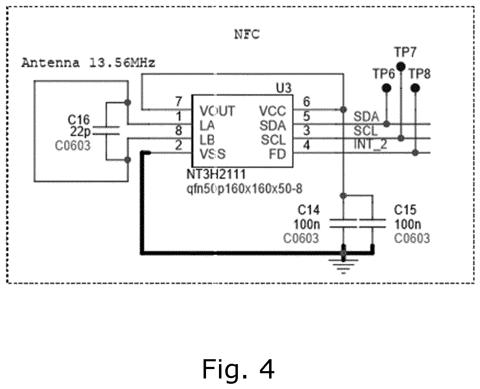

Figure 1 is a cross-sectional view of a trap in accordance with various embodiments of the invention. The trap 100 is here shown with a killing means in the form of a piston or spear 180. The piston or spear 180 is both gas driven, and spring driven. The gas tank 130 and the spring 160 are shown. The piston or spear 180 is shown in a retracted position and is activated by the trigger rod 120 (trigger mechanism). The piston or spear 180 is preferably made from a polymeric material that is preferably injection mouldable, such as plastic, e.g. polyethylene, polyoxymethylene, or polyethylene. The piston or spear 180 could though be made of metal, such as steel or the like. The trap 100 also comprises a housing with an entrance 110 leading to a kill zone chamber 170, wherein, in this embodiment, the trigger rod 120 is positioned. The kill zone chamber 170 is where the target animal is killed. A detachable lure and/or bait chamber 140 is directly connected to the kill zone chamber 170. A container 142 for lure and/or bait may be seen positioned within the lumen of the lure and/or bait chamber 140. A control unit 150 is shown attached to the lure and/or bait chamber 140. The control unit 150 comprises a battery 156 driven wireless near-field communication device 152 with an antenna 154. A part of the control unit's housing 151 is shaped as a pentagonal prism, and the antenna 154 is positioned along one of the five side walls of said prism. The other part of the housing 151 is configured as a flange adapted for being coupled to the lure and/or bait chamber 140. However, this part could alternatively be shaped as any suitable type of fastening means. The important part of the housing 151 is the prismatoid shaped part that can be rotated, thereby allowing for different spatial positions for the antenna 154. In Figure 2A, the wall 153 supporting the antenna is pointing downwards, and in Figure 2B the same wall 153 is pointing upwards. The two different positions are possible because the lure and/or bait chamber 140, onto which the control unit 150 is attached, can be rotated relative to the kill zone chamber 170. Figure 4 is an exemplary circuit of a near-field communication device with antenna embedded in the communication unit.

In Figure 1, an insert 190 is positioned (releasably fastened) within the kill zone chamber 170 and in front of the trigger rod 120. The intention is that only targeted animals can reach the trigger rod 120. Hence, the insert 190 is adapted for restricting the height and width of the part of the kill zone chamber 170, where the trigger rod 120 is positioned. The insert may be selected from a kit of inserts, each adapted for targeting a specific animal/specie.

## Claims

1. A rechargeable trap (100) comprising:
- a housing with an entrance (110) leading to a kill zone chamber (170);
- a spring driven and/or gas pressure driven killing means (180) adapted for operating within said kill zone chamber (170);
- a trigger mechanism (120) adapted to activate said killing means (180);
**characterized in that** the trap (100) further comprises:
- a sensor unit configured for determining the number of kills by monitoring the number of triggers of the killing means;
- at least one control unit (150) connected to said sensor unit, wherein said control unit (150) comprises at least one data collection device adapted to collect measurement data acquired from said sensor unit; wherein said control unit (150) further comprises at least one wireless near-field communication device (152) adapted to transmit measurement data about the number of activations of said killing means (180), preferably time stamped, and an identification number of said trap.

2. The rechargeable trap (100) according to claim 1, wherein said near-field communication device (152) is adapted for being turned in multiple directions.

3. The rechargeable trap (100) according to claim 1, wherein said near-field communication device (152) comprises an antenna (154) adapted for being turned in multiple directions.

4. The rechargeable trap (100) according to any one of the claims 1-3, further comprising a detachable lure and/or bait chamber (140) directly or indirectly connected to said kill zone chamber (170); and wherein said control unit (150) is connected to said lure and/or bait chamber (140).

5. The rechargeable trap (100) according to claim 4, wherein said control unit (150) or said lure and/or bait chamber (140) is adapted for being turned in multiple directions.

6. The rechargeable trap (100) according to claim 4, wherein said lure and/or bait chamber (140) is adapted for being rotated relative to said kill zone chamber (170); wherein said near-field communication device (152) comprises an antenna (154) positioned at an oblique angle relative to the lure and/or bait chamber's axis of rotation.

7. The trap (100) according to claim 6, wherein a wall of said kill zone chamber (170) is configured with a ring-shaped opening (172); wherein said lure and/or bait chamber (140) is configured with a ring-shaped opening (146), and wherein said ring-shaped openings (172, 146) are adapted to couple and rotate relative to one another.

8. The rechargeable trap (100) according to any one of the claims 1-7, wherein the control unit (150) comprises a housing and where a part of the housing is shaped as a prismatoid, such as a prism, a pyramid, an antiprism, a cupola, or a frustum; wherein the control unit (150) further comprises an antenna (154), and wherein said antenna (154) is positioned along a single side wall (153) defining said prismatoid.

## Patentansprüche

1. Wiederaufladbare Falle (100), umfassend:
- ein Gehäuse mit einem Eingang (110), der zu einer Tötungszonenkammer (170) führt;
- ein federbetriebenes und/oder gasdruckbetriebenes Tötungsmittel (180), das zum Betreiben innerhalb der Tötungszonenkammer (170) angepasst ist;
- einen Auslösemechanismus (120), der dazu angepasst ist, das Tötungsmittel (180) zu aktivieren;
**dadurch gekennzeichnet, dass** die Falle (100) ferner Folgendes umfasst:
- eine Sensoreinheit, die zum Bestimmen der Anzahl von Tötungen durch Überwachen der Auslöseanzahl des Tötungsmittels konfiguriert ist;
- mindestens eine Steuereinheit (150), die mit der Sensoreinheit verbunden ist, wobei die Steuereinheit (150) mindestens eine Datenerfassungsvorrichtung, die dazu angepasst ist, von der Sensoreinheit erlangte Messdaten zu erfassen, umfasst; wobei die Steuereinheit (150) ferner mindestens eine drahtlose Nahfeldkommunikationsvorrichtung (152), die angepasst ist, um Messdaten über die Anzahl von Aktivierungen des Tötungsmittels (180) zu übertragen, vorzugsweise mit einem Zeitstempel und einer Identifikationsnummer der Falle, umfasst.

2. Wiederaufladbare Falle (100) nach Anspruch 1, wobei die Nahfeldkommunikationsvorrichtung (152) dazu angepasst ist, in mehrere Richtungen gedreht zu werden.

3. Wiederaufladbare Falle (100) nach Anspruch 1, wobei die Nahfeldkommunikationsvorrichtung (152) eine Antenne (154), die dazu angepasst ist, in mehrere Richtungen gedreht zu werden, umfasst.

4. Wiederaufladbare Falle (100) nach einem der Ansprüche 1 bis 3, ferner umfassend eine abnehmbare Köder- und/oder Lockmittelkammer (140), die direkt oder indirekt mit der Tötungszonenkammer (170) verbunden ist; und wobei die Steuereinheit (150) mit der Köder- und/oder Lockmittelkammer (140) verbunden ist.

5. Wiederaufladbare Falle (100) nach Anspruch 4, wobei die Steuereinheit (150) oder die Köder- und/oder Lockmittelkammer (140) dazu angepasst ist, in mehrere Richtungen gedreht zu werden.

6. Wiederaufladbare Falle (100) nach Anspruch 4, wobei die Köder- und/oder Lockmittelkammer (140) dazu angepasst ist, relativ zu der Tötungszonenkammer (170) gedreht zu werden; wobei die Nahfeldkommunikationsvorrichtung (152) eine Antenne (154), die in einem schrägen Winkel relativ zu der Rotationsachse der Köder- und/oder Lockmittelkammer positioniert ist, umfasst.

7. Falle (100) nach Anspruch 6, wobei eine Wand der Tötungszonenkammer (170) mit einer ringförmigen Öffnung (172) konfiguriert ist; wobei die Köder- und/oder Lockmittelkammer (140) mit einer ringförmigen Öffnung (146) konfiguriert ist und wobei die ringförmigen Öffnungen (172, 146) angepasst sind, um sich zu koppeln und relativ zueinander zu rotieren.

8. Wiederaufladbare Falle (100) nach einem der Ansprüche 1 bis 7, wobei die Steuereinheit (150) ein Gehäuse umfasst und wobei ein Teil des Gehäuses als ein Prismatoid, wie ein Prisma, eine Pyramide, ein Antiprisma, eine Kuppel oder ein Kegelstumpf, geformt ist; wobei die Steuereinheit (150) ferner eine Antenne (154) umfasst und wobei die Antenne (154) entlang einer einzelnen Seitenwand (153), die das Prismatoid definiert, positioniert ist.

## Revendications

1. Piège (100) rechargeable comprenant :
- un boîtier avec une entrée (110) menant à une chambre de zone de mise à mort (170) ;
- un moyen de mise à mort entraîné par ressort et/ou entraîné par pression de gaz (180) adapté pour fonctionner dans ladite chambre de zone de mise à mort (170) ;
- un mécanisme de déclenchement (120) adapté pour activer ledit moyen de mise à mort (180) ;
**caractérisé en ce que** le piège (100) comprend en outre :
- une unité de capteur configurée pour déterminer le nombre de mises à mort en surveillant le nombre de déclenchements du moyen de mise à mort ;
- au moins une unité de commande (150) connectée à ladite unité de capteur, dans lequel ladite unité de commande (150) comprend au moins un dispositif d'acquisition de données adapté à la collecte de données de mesure acquises par ladite unité de capteur ; dans lequel ladite unité de commande (150) comprend en outre au moins un dispositif de communication en champ proche (152) sans fil adapté à la transmission de données de mesure relatives au nombre d'activations dudit moyen de mise à mort (180), de préférence horodatées, et d'un numéro d'identification dudit piège.

2. Piège (100) rechargeable selon la revendication 1, dans lequel ledit dispositif de communication en champ proche (152) est adapté pour être tourné dans de multiples directions.

3. Piège (100) rechargeable selon la revendication 1, dans lequel ledit dispositif de communication en champ proche (152) comprend une antenne (154) adaptée pour être tournée dans de multiples directions.

4. Piège (100) rechargeable selon l'une quelconque des revendications 1 à 3, comprenant en outre une chambre d'appât et/ou de leurre détachable (140) directement ou indirectement connectée à ladite chambre de zone de mise à mort (170) ; et dans lequel ladite unité de commande (150) est connectée à ladite chambre d'appât et/ou de leurre (140).

5. Piège (100) rechargeable selon la revendication 4, dans lequel ladite unité de commande (150) ou ladite chambre d'appât et/ou de leurre (140) est adaptée pour être tournée dans de multiples directions.

6. Piège (100) rechargeable selon la revendication 4, dans lequel ladite chambre d'appât e't/ou de leurre (140) est adaptée pour être entraînée en rotation par rapport à ladite chambre de zone de mise à mort (170) ; dans lequel ledit dispositif de communication en champ proche (152) comprend une antenne (154) positionnée selon un angle oblique par rapport à l'axe de rotation de la chambre d'appât et/ou de leurre.

7. Piège (100) selon la revendication 6, dans lequel une paroi de ladite chambre de zone de mise à mort (170) est configurée avec une ouverture en forme d'anneau (172) ; dans lequel ladite chambre d'appât et/ou de leurre (140) est configurée avec une ouverture en forme d'anneau (146), et dans lequel lesdites ouvertures en forme d'anneau (172, 146) sont adaptées pour se coupler et entrer en rotation l'une par rapport à l'autre.

8. Piège (100) rechargeable selon l'une quelconque des revendications 1 à 7, dans lequel l'unité de commande (150) comprend un logement et où une partie du logement a la forme d'un prismatoïde, tel qu'un prisme, une pyramide, un antiprisme, une coupole ou un tronc de cône ; dans lequel l'unité de commande (150) comprend en outre une antenne (154), et dans lequel ladite antenne (154) est positionnée le long d'une seule paroi latérale (153) définissant ledit prismatoïde.
